Europäisches Patentamt

European Patent Office

Office européen des brevets

(19)

(11) Veröffentlichungsnummer: **0 416 109 A1**

(12) **EUROPÄISCHE PATENTANMELDUNG**
**veröffentlicht nach Art. 158 Abs. 3**
**EPÜ**

(21) Anmeldenummer: **89909458.5**

(22) Anmeldetag: **27.03.89**

(86) Internationale Anmeldenummer:
**PCT/SU89/00077**

(87) Internationale Veröffentlichungsnummer:
**WO 90/11025 (04.10.90 90/23)**

(51) Int. Cl.5: **A23N 1/00**

(43) Veröffentlichungstag der Anmeldung:
**13.03.91 Patentblatt 91/11**

(84) Benannte Vertragsstaaten:
**CH DE FR IT LI SE**

(71) Anmelder: **OPYTNY ZAVOD ISTITUTA PRIKLADNOI FIZIKI AKADEMII NAUK MOLDAVSKOI SSR**
ul. Pryanishnikova, 5
**Kishinev, 277028(SU)**

(72) Erfinder: **GRISHKO, Alexei Andreevich**
**ul. Karmanova, 12-31**

**Kishinev, 277024(SU)**
Erfinder: **KOZIN, Vladimir Mikhailovich**
**ul. Dimo, 7/3-122**
**Kishinev, 277030(SU)**
Erfinder: **CHEBANU, Vasily Grigorievich**
**bulvar Sovetskoi Armii, 16-16**
**Kishinev, 277043(SU)**

(74) Vertreter: **Patentanwälte Beetz sen. - Beetz jun. Timpe - Siegfried - Schmitt-Fumian-Mayr**
**Steinsdorfstrasse 10**
**W-8000 München 22(DE)**

(54) **ELEKTROPLASMOLISATOR ZUR BEHANDLUNG VON PFLANZLICHEM ROHMATERIAL.**

(57) Der Elektroplasmolysator zur Verarbeitung von pflanzlichen Rohstoffen enthält ein zylindrisches Gehäuse (l) mit einem Zu- und einem Auslauf (2) bzw. 3) und längs der Mantellinie im Innern des zylindrischen Gehäuses (l) gleichmässig angeordnete Elektroden (5). Auch ist der Elektroplasmolysator mit Π-förmigen Elektromagneten (6) versehen, die auf der Aus-senfläche längs der Mantellinie des zylindrischen Gehäuses gleichmässig angebracht sind. Die Zahl der Elektromagneten (6) beträgt ein Vielfaches von drei. Jeder Elektromagnet (6) ist über den durch die an seine Spule (8) angeschlossene benachbarte Elektrode (5) gebildeten Zwischenelektrodenraum angeordnet. Die Achse (9) des Joches (l0) jedes Elektromagneten (6) liegt parallel zur Achse (4) des zylindrischen Raumes (l).

FIG.1

Xerox Copy Centre

## ELEKTROPLASMOLYSATOR ZUR VERARBEITUNG VON PFLANZLICHEN ROHSTOFFEN

Gebiet der Technik

Die Erfindung bezieht sich auf das Gebiet der Verarbeitung von Nahrungsmitteln und betrifft insbesondere einen Elektroplasmolysator zur Verarbeitung von pflanzlichen Rohstoffen.

Zugrundeliegender Stand der Technik

Bekannt ist ein Elektroplasmolysator zur Verarbeitung von pflanzlichen Rohstoffen (B.R.Lasarenko u.a. "Elektroplasmolys", 1977, Kartja moldowenjaske, Kishinew, S. 48-49), der ein zylindrisches Gehäuse mit einem Zulauf und einem Auslauf und längs der Mantellinie im Innern des zylindrischen Gehäuses gleichmässig angeordnete Ringelektroden enthält. Die Elektroden sind mit einer Stromquelle verbunden. Den pflanzlichen Rohstoff lässt man durch den inneren Raum des Gehäuses durch und behandelt diesen dabei mit elektrischem Strom. Bei dem bekannten Elektroplasmolysator zur Verarbeitung von pflanzlichen Rohstoffen findet wegen ringförmiger Ausführung der Elektroden und der Anordnung derselben längs der Mantellinie des zylindrischen Gehäuses eine ungleichmässige Verteilung des elektrischen Stromgradienten im Gehäuse statt. Hierbei ist der elektrische Stromgradient an der Innenfläche des zylindrischen Gehäuses maximal und nimmt in Richtung zu der Längsachse des zylindrischen Gehäuses ab. Dies führt zu einer ungleichmässigen Verarbeitung des pflanzlichen Rohstoffes und zu einer ungenügender Saftergiebigkeit desselben.

Bekannt ist ein Elektroplasmolysator zur Verarbeitung von pflanzlichen Rohstoffen (SU, A, 535076), der ein zylindrisches Gehäuse mit einem Zulauf und einem Auslauf und drei längs der Mantellinie im Innern des zylindrischen Gehäuse unter einem Winkel von 120° zueinander gleichmässig angeordnete Elektroden von Sektorprofil enthält. Den pflanzlichen Rohstoff führt man nach seiner Zerkleinerung in das zylindrische Gehäuse über den Zulauf ein, so dass der innere Raum des zylindrischen Gehäuses mit der so zerkleinerten Rohstoffmasse gefüllt wird. Die zerkleinerte Rohstoffmasse wird bei der Fortbewegung in dem Gehäuse des Elektroplasmolysators zur Verarbeitung von pflanzlichen Rohstoffen zwischen den Elektroden einer Verarbeitung mit elektrischem Strom, der den Elektroden zugeführt wird, unterworfen.

Bei diesem Elektroplasmolysator zur Verarbeitung von pflanzlichen Rohstoffen findet eine gleichmässige Verteilung des elektrischen Stromgradienten nur in dem Zwischenelektrodenraum statt, der durch die Seitenflächen benachbarter Elektroden gebildet wird. In dem restlichen Raum des zylindrischen Gehäuses findet eine ungleichmässige Verteilung des elektrischen Stromgradienten statt. Dies führt zu einer ungleichmässigen Verarbeitung des zerkleinerten pflanzlichen Rohstoffes und zu einer ungenügenden Saftergiebigkeit desselben.

Offenbarung der Erfindung

Der Erfindung liegt die Aufgabe zugrunde, einen Elektroplasmolysator zur Verarbeitung von pflanzlichen Rohstoffen mit einer solchen konstruktiven Ausführung zu schaffen, die es gestattet, durch Erzeugung eines Magnetfeldes, das mit dem elektrischen Feld im Innern des zylindrischen Gehäuses zusammenwirkt, das elektrische Feld in diesem umzuverteilen und den elektrischen Stromgradienten in den Bereichen mit ungenügendem Verarbeitungsgrad des pflanzlichen Rohstoffes mit elektrischen Strom zu vergrössern und damit eine gleichmässige Verarbeitung des zerkleinerten Rohstoffes zu steigern.

Die gestellte Aufgabe wird dadurch gelöst, dass der Elektroplasmolysator zur Verarbeitung von pflanzlichen Rohstoffen, der ein zylindrisches Gehäuse mit einem Zulauf und einem Auslauf und längs der Mantellinie im Innern des zylindrischen Gehäuses gleichmässig angeordnete Elektroden enthält, gemäss der Erfindung mit Π-förmigen auf der Aussenfläche des zylindrischen Gehäuses gleichmässig angebrachten Elektromagneten, deren Zahl ein Vielfaches von drei beträgt, versehen ist, wobei jeder Elektromagnet über dem durch zwei, an eine Spule angeschlossene, benachbarte Elektroden, gebildeten Zwischenelektrodenraum angeordnet ist, während die Achse des Joches jedes Elektromagneten parallel zur Achse des zylindrischen Gehäuses liegt.

Der erfindungsgemässe Elektroplasmolysator zur Verarbeitung von pflanzlichen Rohstoffen gestattet, die Saftergiebigkeit des zerkleinerten pflanzlichen Rohstoffes um 1,5 bis 2,5% bei dessen Benutzung in technologischen Linien zur Primärverarbeitung von Äpfeln zu Saft dadurch zu steigern, dass eine Zerstörung des Zytoplasmas des pflanzlichen Rohstoffes im gesamten Innenraum des zylindrischen Gehäuses stattfindet. Hierbei erfolgt eine gleichmässige Verarbeitung der zerkleinerten Rohstoffmasse, was zu einer stabilen Betriebsweise der für die Verarbeitung von pflanzlichen Rohstoffen bestimmten Ausrüstungen und zu einer Steigerung deren Leistung führt.

Infolge der Vergrösserung der Saftergiebigkeit enthalten die Äpfelrückstände eine geringere Feuchtemenge und deshalb wird bei deren Trocknung der Kraftstoffverbrauch vermindert und die Trocknungsgeschwindigkeit erhöht. Bei der Verarbeitung einer Maische von Weintrauben nimmt die Saftergiebigkeit um einen Wert von 0,5 bis 0,75% zu. Hierbei gehen in den Saft im vollen Bestand die Säuren, Zucker und Vitaminen des Ausgangsproduktes über. Besonders zweckmässig ist die Verarbeitung von Weinbeeren der Isabella-Sorten, die nach der traditionellen Technologie eine Vorbehandlung mit Fermenten oder eine Wärmebehandlung im Laufe von 12 bis 48 Stunden erfordern, wonach diesen der Saft entzogen wird. Die Verarbeitung von Rohstoffen in diesem Elektroplasmolysator bietet die Möglichkeit, den Fermentenverbrauch und die Zeit der Wärmebehandlung wesentlich zu verkürzen. Die Bearbeitung von Zuckerschnitzeln in diesem Elektroplasmolysator gestattet es, die Qualität des Diffusionssaftes zu erhöhen, wobei der Wärmeenergieverbrauch vermindert wird. Bei der Gewinnung von Proteinkraftfutter aus pflanzlichen Rohstoffen im Landwirtschaftsbetrieb verbessert die Verarbeitung des pflanzlichen Rohstoffes die Koagulation des Eiweisstoffes.

Der erfindungsgemässe Elektroplasmolysator erfordert keine kontinuierliche Beobachtung. Er ist zuverlässig im Betrieb. Die geringen Abmessungen und die geringe Masse ermöglichen den Transport des Elektroplasmolysators mit jeder beliebigen Transportart auf grosse Entfernungen und verlängern die Zeit seiner Saisonbenutzung.

Kurzbeschreibung der Zeichnungen

Nachstehend soll die Erfindung an Hand eines konkreten Ausführungsbeispiel unter Bezugnahme auf die beiliegenden Zeichnungen erläutert werden. Es zeigen:

Fig. I die Gesamtansicht eines erfindungsgemässen Elektroplasmolysators zur Verarbeitung von pflanzlichen Rohstoffen;

Fig. 2 einen Querschnitt des Elektroplasmolysators zur Verarbeitung von pflanzlichen Rohstoffen, entlang der Linie II-II in Fig. I;

Fig. 3 das Schaltbild für den Anschluss der Elektroden und Spulen der Elektromagneten an eine Drehstromquelle.

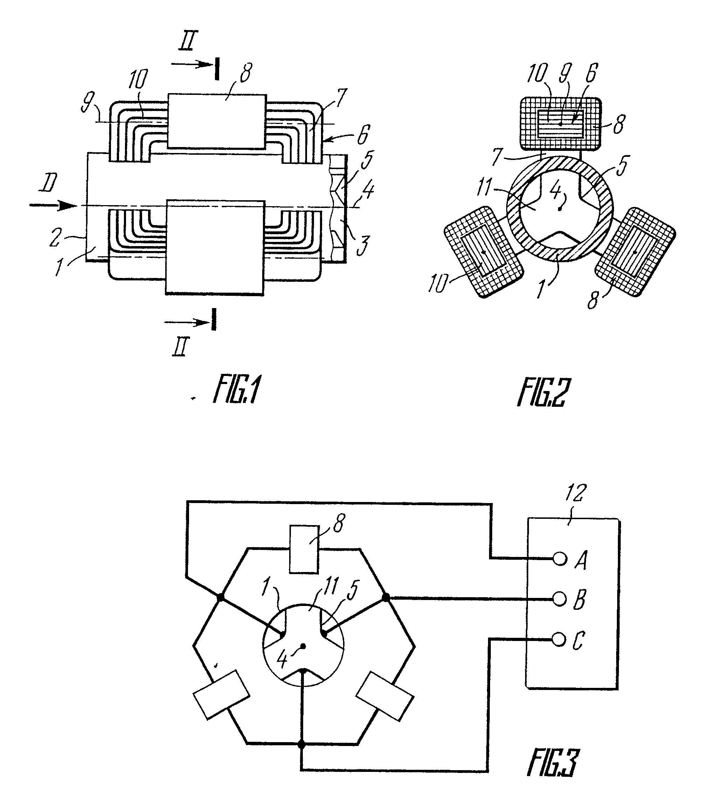

Beste Ausführungsvariante der Erfindung

Der Elektroplasmolysator zur Verarbeitung von pflanzlichen Rohstoffen enthält ein aus einem Dielektrikum, z.B. aus Glastextolit ausgeführtes zylindrisches Gehäuse I (Fig. I) mit einem Zulauf 2 und einem Ablauf 3. Im Innern des Gehäuses I sind parallel zu seiner Längsachse 4 drei Elektroden 5 von Sektorprofil angebracht. Die Elektroden 5 sind längs der Mantellinie des zylindrischen Gehäuses I unter einem Winkel von 120° zueinander gleichmässig angeordnet. Die Elektroden 5 sind aus einem gegen Nahrungsmittel inaktiven Metall, z.B. aus Titan hergestellt. An der Aussenfläche des zylindrischen Gehäuses I sind längs seiner Mantellinie gleichmässig drei Π-förmige Elektromagneten 6 mit einem aus Dynamoblech ausgeführten magnetischen Kreis 7 und einer Spule 8 angeordnet. Dabei sind die Elektromagneten 6 derart angeordnet, dass die Achse 9 des Joches 10 des magnetischen Kreises 7 jedes Elektromagneten 6 parallel zur Längsachse 4 des Gehäuses I liegt. Die Zahl der Elektromagnete 6 beträgt ein Vielfaches von drei. Die Zahl der Elektromagnete 6 wählt man als Vielfaches von drei in Zusammenhang mit der besten Einwirkung des Magnetfeldes bei einer solchen Vielfachheit auf die Umverteilung des elektrischen Stromgradienten im Gehäuse I des Elektroplasmolysators. Mit dem Pfeil D ist die Bewegungsrichtung des pflanzlichen Rohstoffes bezeichnet.

Jeder Elektromagnet 6 ist über dem durch zwei, an die Spule 3 des Elektromagneten 6 angeschlossene benachbarte Elektroden 5 gebildeten Raum II (Fig. 2) angeordnet.

Die Anbringung der Π-förmigen Elektromagneten 6 über den Zwischenelektrodenraum II und die Anordnung der Achse 9 des Joches 10 parallel zur Längsachse 4 des Gehäuses I bietet die Möglichkeit, ein Magnetfeld zu erzeugen, dessen Einwirkung zum Ausgleichen des elektrischen Stromgradienten im gesamten Volumen des Gehäuses I führt, was zu einer gleichmässigen Verarbeitung des pflanzlichen Rohstoffes und einer zusätzlichen Saftausbeute, einer Intensivierung der Elektroplasmolyse beiträgt.

In Fig. 3 ist das Schaltbild für den Anschluss der Elektroden 5 und Spulen 8 an die Phasen A, B, C der Drehstromquelle 12 dargestellt.

Jede der Elektroden 5 ist an die entsprechende Phase A, B, C der Speisequelle 12 angeschlossen. So ist z.B. die eine Elektrode 5 an die Phase A, die - im Uhrzeigersinn gesehen - nächste Elektrode 5 an die Phase B und die nächstfolgende Elektrode 5 an die Phase V angeschlossen. Jede Spule 8, die über dem durch zwei benachbarte Elektroden 5 gebildeten Raum II liegt, ist an diese Elektroden 5 derart angeschlossen, dass der Anfang der einen Spule 8 mit dem Ende der benachbarten Spule 8 verbunden ist. Der Anschluss einer der Spulen 8 an zwei Nachbarelektroden 5, über deren Zwischenelektrodenraum II ein Elektromagnet 6 (Fig. 2) angebracht ist, bietet die Möglichkeit, eine automatische Synchronisierung der Zusammenwirkung des Magnetflusses mit dem gerade zwischen diesen Elektroden 5 (Fig. 3) fliessenden Strom zu realisieren.

Beim Anlegen von Spannung an die Elektroden 5 fliesst in dem Rohstoff über die Gesamtheit der stromleitenden Kreise ein Strom, um deren jeden ein Kreismagnetfeld erzeugt wird. Die meisten stromleitenden Kreise sind zwischen den Elektroden 5 konzentriert. Die Zone mit einem geringen elektrischen Stromgradienten liegt in der Mitte um die Längsachse 4 (Fig. I) des Gehäuses I und gilt als Zone mit nichtvoller Verarbeitung des pflanzlichen Rohstoffes. Die Π-förmige Elektromagnete 6 erzeugen ein äusseres Magnetfeld, deren Richtung durch die Konstruktion des Elektromagneten 6 und dessen Anbringung am Gehäuse I des Elektroplasmolysators bestimmt wird. Bei einer Anordnung des magnetischen Kreises 7 des Elektromagneten 6 parallel zur Achse 4 des Gehäuses I ist die magnetische Induktion des äusseren Magnetfeldes senkrecht zur Richtung der stromleitenden Kreise gerichtet.

Bei der Zusammenwirkung des äusseren Magnetfeldes mit den Kreismagnetfeldern bedingt das resultierende Magnetfeld das Auftreten einer Kraft, die auf die stromleitenden Kreise wirkt und zur Längsachse 4 des Gehäuses I gerichtet ist. Es findet eine Umverteilung der stromleitenden Kreise 6 im Gehäuse I und eine Uberdeckung der Zone mit nichtvoller Verarbeitung des Rohstoffes statt, was zu einem Ausgleich des elektrischen Stromgradienten im gesamten Volumen des Gehäuses I und zu einer gleichmässigen Verarbeitung der zerkleinerten Rohstoffmasse führt.

Die Zahl der Elektroden 5 in dem Gehäuse I des Elektroplasmolysators kann ein Vielfaches der Zahl der Phasen A, B, C der Speisequelle I2 betragen. Hierbei wird jedes Paar benachbarter Elektroden 5 an verschiedene Phasen A, B, C angeschlossen, was es gestattet, die Phasen A, B, C der Speisequelle I2 gleichmässig zu belasten. In diesem Falle führt die Anbringung der Elektromagneten über dem Zwischenelektrodenraum II und der Anschluss der Enden der Spulen 8 an die benachbarten Elektroden 5 auch zum Ausgleich des elektrischen Stromgradienten im gesamten Volumen des Gehäuses I, was eine gleichmässige Verarbeitung des pflanzlichen Rohstoffes und eine Steigerung dessen Saftergiebigkeit bedingt.

Der Elektroplasmolysator zur Verarbeitung von pflanzlichen Rohstoffen funktioniert folgenderweise.

Der pflanzliche Rohstoff wird nach der Zerkleinerung mit Hilfe einer Pumpe (nicht mitgezeichnet) in das zylindrische Gehäuse (Fig. I) über den Zulauf 2 gefördert und füllt den Innenraum des Gehäuses I aus. Gleichzeitig wird an die Elektroden 5 und die Spulen der Elektromagneten 6 Spannung von der Drehstromquelle I2 gelegt. Uber den pflanzlichen Rohstoff fliesst ein elektrischer Strom, der auf die Rohstoffzellen einwirkt und zu einer Abtrennung des Zytoplasmas von der Hülle führt. Es werden Kanäle zum Austreten des Zellensaftes gebildet, was zu einer Vergrösserung der Zellendurchlässigkeit und einer Steigerung der Saftergiebigkeit des Rohstoffes bei dessen weiterer Verarbeitung mit einer Presse oder einer Zentrifuge (nicht mitgezeichnet) führt. Der in den Spulen 8 der Elektromagnete 6 fliessende Strom erregt in dem magnetischen Kreis 7 einen Magnetfluss, der in dem Zwischenelektrodenraum II ein Magnetfeld erzeugt, dessen Kraftlinien die Kraftlinien des elektrischen Feldes schneiden.

Die Anbringung der Elektromagneten 6 und der Anschluss der Spulen geschieht derart, dass die Kraftlinien des Magnetfeldes und die Kraftlinien des elektrischen Feldes sich unter einem rechten Winkel schneiden. In dem Gehäuse findet eine Umverteilung des elektrischen Stromes in dem Innenraum des Gehäuses I, d.h. eine Vergrösserung des elektrischen Stromgradienten in den Bereichen mit ungenügendem Verarbeitungsgrad des pflanzlichen Rohstoffes mit elektrischem Strom statt. Infolgedessen wird eine gleichmässige Verarbeitung des zerkleinerten pflanzlichen Rohstoffmasse und eine Steigerung deren Saftergiebigkeit erreicht. Die verarbeitete Rohstoffportion wird über den Auslauf 3 des Gehäuses I abgeleitet und einer Presse oder einer Zentrifuge zugeführt. Die Pumpe-bringt die nächste Rohstoffportion zu und der Vorgang wiederholt sich. Im Ergebnis verläuft die Elektroplasmolyse kontinuierlich. Die Verarbeitung des Rohstoffes findet in dem geschlossenen Gehäuse ohne Sauerstoffzutritt statt, was ein Anbrennen des Rohstoffes an den Elektroden 5 und eine Oxydation ausschliesst. Der mit Elektromagneten 6 versehene Elektroplasmolysator 6 sichert eine Erhöhung der Gleichmässigkeit der elektrischen Verarbeitung von Obst, Gemüse und Hackfrüchten, was zu einer Steigerung deren Saftergiebigkeit führt.

Der Elektroplasmolysator ist einfach im Aufbau, kompakt, fertigungsgerecht, leicht montierbar in technologischen Linien zur Verarbeitung von pflanzlichen Rohstoffen, gefahrlos im Betrieb.

Gewerbliche Anwendbarkeit

Die Erfindung kann in technologischen Linien zur Primärverarbeitung von Obst, Gemüse, Hackfrüchten sowie in der Nahrungsmittel-, Zucker- und pharmazeutischen Industrie sowie bei der Futteraufbereitung im Landwirtschaftsbetrieb Verwendung finden.

**Ansprüche**

1. Elektroplasmolysator zur Verarbeitung von pflanzlichen Rohstoffen, der ein zylindrisches Gehäuse (l) mit einem Zulauf (2) und einem Auslauf (3) und

2. längs der Mantellinie im Innern des zylindrischen Gehäuses (l) gleichmässig angeordnete Elektroden (5) enthält, dadurch **gekennzeichnet,** dass er mit Π-förmigen, auf der Aussenfläche des zylindrischen Gehäuse (l) gleichmässig angebrachte Elektromagneten (6), deren Zahl ein Vielfaches von drei beträgt, versehen ist, wobei jedes Elektromagnet (6) über dein durch die an seine Spule (8) angeschlossenen benachbarten Elektroden (5) an gebildeten Zwischenelektrodenraum (II) angeordnet ist, während die Achse (9) des Joches (l0) jedes Elektromagneten (6) parallel zur Längsachse (4) des zylindrischen Gehäuses (l) liegt.

FIG.1

FIG.2

FIG.3

# INTERNATIONAL SEARCH REPORT

International Application No PCT/SU89/00077

## I. CLASSIFICATION OF SUBJECT MATTER (if several classification symbols apply, indicate all)

According to International Patent Classification (IPC) or to both National Classification and IPC

$IPC^5$: A23N 1/00

## II. FIELDS SEARCHED

### Minimum Documentation Searched

| Classification System | Classification Symbols |
|---|---|
| $IPC^4$ | A23N 1/00 |

Documentation Searched other than Minimum Documentation
to the Extent that such Documents are Included in the Fields Searched

## III. DOCUMENTS CONSIDERED TO BE RELEVANT

| Category* | Citation of Document, [11] with indication, where appropriate, of the relevant passages [12] | Relevant to Claim No. [13] |
|---|---|---|
| A | SU, AI, 535076 (INSTITUT PRIKLADNOI FIZIKI AN MOLDAVSKOI SSR), 13 December 1976, see the claims (cited in the description) | 1 |
| A | SU, AI, 858732 (A.YA. PAPCHENKO) 30 August 1981, see the claims | 1 |
| A | SU, AI, 1067635 (INSTITUT PRIKLADNOI FIZIKI AN MOLDAVSKOI SSR), 15 August 1987, see column 1, lines 44-55 | 1 |
| A | FR, AI, 2619489 (INSTITUT PRIKLADNOI FIZIKI AKADEMII NAUK MOLDAVSKOI SSR), 24 February 1989, see the claims | 1 |
| A | WO, AI, 88/10073 (INSTITUT PRIKLADNOI FIZIKI AN MOLDAVSKOI SSR), 29 December 1988, see the claims | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 14 November 1989 (14.11.89) | 6 December 1989 (06.12.89) |

| International Searching Authority | Signature of Authorized Officer |
|---|---|
| ISA/SU | |

Form PCT/ISA/210 (second sheet) (January 1985)